# EUROPEAN PATENT SPECIFICATION

(11) **EP 3 085 115 B1**
(45) Date of publication and mention of the grant of the patent: **11.07.2018**
(21) Application number: 14819154.7
(22) Date of filing: 24.11.2014
(51) Int. Cl.: H04S 7/00, G06F 17/30, H04L 12/28, G10L 19/012, G10L 19/26

(54) **ADAPTING AUDIO BASED UPON DETECTED ENVIRONMENTAL NOISE**
AUDIOANPASSUNG BASIEREND AUF UMGEBUNGSGERÄUSCHEN
ADAPTATION AUDIO BASÉE SUR DU BRUIT AMBIANT

(30) Priority: 20.12.2013 US 201314136713
(43) Date of publication of application: 26.10.2016
(73) Proprietor: Microsoft Technology Licensing, LLC, Redmond, WA 98052-6399 (US)
(72) Inventor: MORRIS, Daniel, Redmond, Washington 98052-6399 (US); WILSON, Andrew D., Redmond, Washington 98052-6399 (US); TAN, Desney S., Redmond, Washington 98052-6399 (US); RUI, Yong, Redmond, Washington 98052-6399 (US); RAGHUVANSHI, Nikunj, Redmond, Washington 98052-6399 (US); WING, Jeannette M., Redmond, Washington 98052-6399 (US)
(74) Representative: CMS Cameron McKenna Nabarro Olswang LLP
(86) International application number: PCT/US2014/066997
(87) International publication number: WO 2015/094590

(56) References cited:
- EP-A1- 1 898 320
- WO-A1-2013/016500
- US-A- 5 434 922
- US-A1- 2008 163 299
- US-A1- 2009 249 942
- US-A1- 2011 060 599
- US-B1- 7 974 838

## Description

### BACKGROUND

The portion of "luxury spending" consumers undertake on home audio equipment has grown tremendously since the introduction of the phonograph. Generally, the desire of consumers to be immersed in media, particularly music (including music as it appears in movies and games) has motivated an explosion in technologies dedicated to bringing better audio quality to the home. Currently, some retail stores are dedicated to selling audio equipment, including high-bandwidth digital media players, carefully calibrated amplifiers, and high-end speakers, amongst other equipment.

Generally, however, designers of conventional audio equipment fail to take into consideration the impact of the environment on audio signals that are emitted through use of such equipment. Some conventional audio systems take size of a room and location of objects in the room into consideration during an initial calibration phase. For example, with respect to an audio system that supports calibration, during the calibration phase, a microphone is positioned at a location where a listener will typically be listening to output of the audio system. Speakers of the audio system then emit calibration signals that include audio signals with known amplitudes at a known set of frequencies, and the microphone detects the signals emitted by the speaker (e.g., after the signal has reflected about the room). An audio receiver device of the audio system then updates filters based upon a comparison between the known amplitudes of the known frequencies in the emitted calibration signals and amplitudes of the known frequencies of the detected calibration signals (e.g., the calibration signals captured by the microphone). For instance, as a function of a layout of the room, the audio receiver device can identify frequencies that are to be amplified or reduced based upon the environment in which the audio system is located and the typical location of the listener in the environment.

For example, US5434922A discloses a system to compensate for the noise level inside a vehicle by measuring the music level and the noise level in the vehicle through the use of analog to digital conversion and adaptive digital filtering, including a sensing microphone in the vehicle cabin to measure both music and noise. WO2013/016500A1 discloses an audio calibration system that determines optimum placement of speakers using a sliding window fast Fourier transform comparison of audio signals. US2011/060599A1 discloses an apparatus for encoding and decoding an audio signal using position information about a moving sound source. US7974 838B1 discloses an apparatus that corrects a user vocal signal by comparing it to a lead vocal signal.

It is to be ascertained, however, that performance of the calibration phase results in filter values that are static; e.g., the values do not alter as environmental conditions alter. Moreover, the calibration phase is based upon reverberant characteristics of an environment, but fails to take into consideration sources of sound in the environment.

### SUMMARY

The following is a brief summary of subject matter that is described in greater detail herein. This summary is not intended to be limiting as to the scope of the claims. The present invention provides a method according to claim 1 and a signal processing apparatus according to claim 6. Further embodiments are defined in the dependent claims

Described herein are various technologies pertaining to improving the subjective listening experience of a user being presented with audio by way of an audio system. In an exemplary embodiment, the listening experience of the user can be improved by performing a nonlinear transformation on an audio signal that is transmitted to a speaker, wherein the speaker emits audio based upon the audio signal. For instance, such nonlinear transformation may be a shifting of the frequency of audio from the key center thereof by a relatively small amount. With more particularity, an audio descriptor that is to be processed can be received, and the audio descriptor can be analyzed for metadata relating to the pitch of audio represented by the audio file. The audio descriptor can be an audio file, at least a portion of streaming audio, at least a portion of video game audio, at least portion of broadcast audio, or the like. In an example, a creator or publisher of a song may cause metadata to be included in an audio descriptor, where the audio descriptor is representative of the song, and the metadata identifies the key center of the song. In another exemplary embodiment, the audio descriptor can be subjected to a computer-executable algorithm that can estimate the key center of audio represented by the audio descriptor based upon frequencies in a first plurality of frames of the audio.

A microphone captures ambient noise in an environment where a listener is listening to audio emitted by way of the audio system. Oftentimes in a room, an automobile, or other environment where the listener often listens to audio, ambient noise includes periodic components. For example, many appliances, such as heating and cooling applications, dishwashers, ovens, etc., output acoustic vibrations that have dominant frequencies. Likewise, road noise, which is discernable to the listener when an automobile is moving, can have dominant frequencies associated therewith. The ambient noise captured by the microphone can be analyzed for such dominant frequencies. For instance, at least one (peak) frequency in a frequency spectrum of the ambient noise captured by the microphone can be identified. When a frequency that corresponds to the key of audio that is to be output by the audio system and the identified peak frequency in the ambient noise are somewhat similar, the ambient noise can (from the perspective of the listener) negatively impact the audio (e.g., song) that is heard by the listener.

Accordingly, when an absolute value of a difference between the identified peak frequency in the captured ambient noise and the frequency corresponding to the key of the song is below a threshold amount, then the audio signal (prior to being transmitted to a speaker of the audio system) can be subjected to a nonlinear transformation. For example, the nonlinear transformation can be a shift in pitch - e.g., the audio signal is processed such that resultant audio emitted from the speaker has been shifted slightly off-key, where the pitch of the audio is aligned with the peak frequency in the ambient noise. Such alignment can improve the subjective listening experience of the user.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

Figs. 1 and 2 illustrate an environment comprising an exemplary signal processing apparatus that is configured to improve quality of audio output by speakers of an audio system from the perspective of a listener.

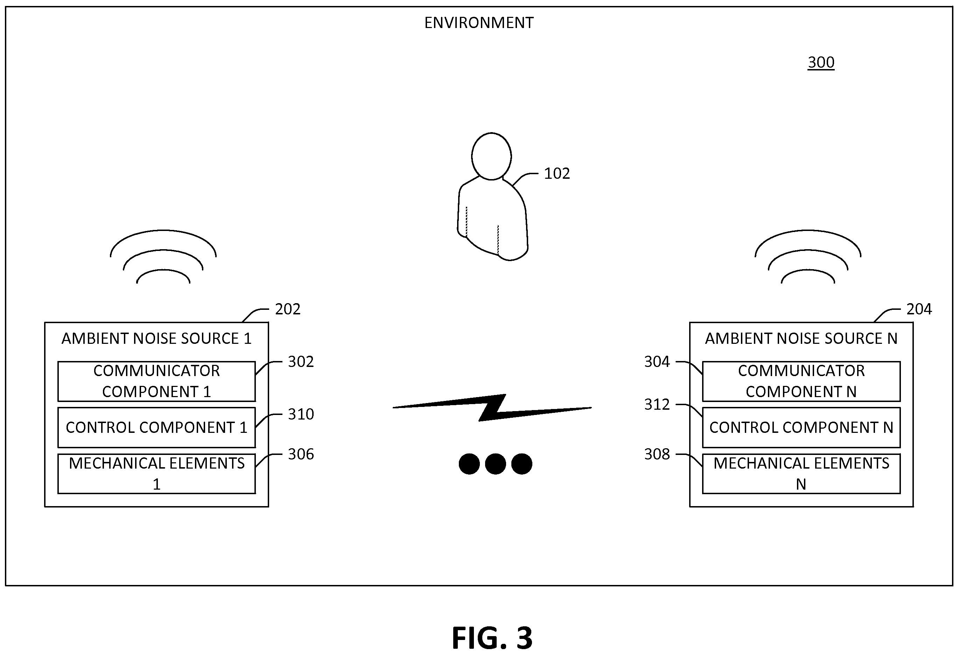

Fig. 3 illustrates an environment comprising exemplary ambient noise sources, where at least one ambient noise source in the ambient noise sources can control its operation to improve acoustics in the environment.
Fig. 4 is a flow diagram illustrating an exemplary methodology for performing a nonlinear transformation on an audio signal to cause frequencies corresponding to a tonal center of resultant audio to align with peak frequencies in ambient noise.
Fig. 5 is a flow diagram illustrating an exemplary methodology for controlling a noise emitting device based upon pitch-related data pertaining to audio to be played by a speaker system.
Fig. 6 is a flow diagram illustrating an exemplary methodology for modifying operation of an appliance based upon data from an ambient source of sound that is indicative of a spectral frequency peak of such source of sound.
Fig. 7 is an exemplary computing system.

### DETAILED DESCRIPTION

Various technologies pertaining to improving subjective listener experience in an environment that comprises a source of ambient noise are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by a single system component may be performed by multiple components. Similarly, for instance, a single component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form. Further, as used herein, the term "exemplary" is intended to mean serving as an illustration or example of something, and is not intended to indicate a preference.

Moreover, as used herein, the terms "component" and "system" are intended to encompass computer-readable data storage that is configured with computer-executable instructions that cause certain functionality to be performed when executed by a processor. The computer-executable instructions may include a routine, a function, or the like. The terms "component" and "system" are also intended to encompass application specific integrated circuits (ASICs) that are configured to perform functionality described as being performed by a component or system. It is also to be understood that a component or system may be localized on a single device or distributed across several devices

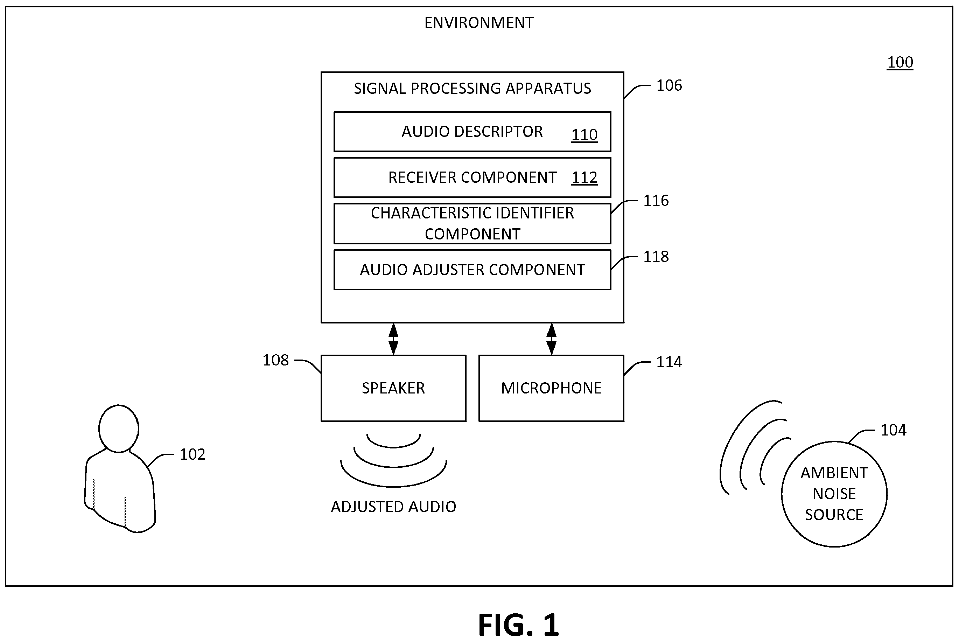

With reference now to Fig. 1, an environment 100 where audio is to be presented to a listener 102 is illustrated. The environment 100 can be a building, a floor in a building, a room in a building, an interior of an automobile, an interior of an aircraft, or the like. The environment 100 includes an ambient noise source 104 that can output acoustic vibrations (noise) that, from the perspective of the listener 102, may negatively impact quality of audio (music) that the listener 102 desires to hear. For example, the ambient noise source 104 can be a noise source that emits acoustic vibrations having periodic components. Accordingly, the ambient noise source 104 may be an appliance that comprises a fan, a motor, or the like, such that the ambient noise source 104 emits acoustic vibrations over a frequency spectrum during its operation, and such acoustic vibrations include at least one frequency having an amplitude that is larger than other frequencies in the frequency spectrum (e.g., the at least one frequency is a peak frequency). Exemplary apparatuses known to emit such types of acoustic vibrations include heating and cooling systems (where fans revolve at a certain frequency), refrigerators (where a refrigerator motor has a rotating member), dishwashers, a washing machines, ceiling fans, floor fans, drying machines, garbage disposals, etc. If the environment 100 is an automobile or airplane, the ambient noise source 104 may include an engine, road noise, wind noise, etc.

The environment 100 includes a signal processing apparatus 106 that is configured to cause audio, including music, to be presented to the listener 102. In an exemplary embodiment, the signal processing apparatus 106 may be or be included in a computing apparatus, wherein the computing apparatus may be (but is not limited to being) a mobile telephone, a media streaming device, a television, a desktop computing device, a tablet (slate) computing device, an audio/video receiver, a set top box, a video game console, or the like. In another exemplary embodiment, the signal processing apparatus 106 may be or be included in an audio/video receiver.

A speaker 108 is in communication with the signal processing apparatus 106, and the signal processing apparatus 106 can transmit a signal (referred to herein as an audio signal) to the speaker 108. The speaker 108 outputs audio based upon the audio signal (e.g., the audio signal causes the speaker 108 to output audio encoded in the audio signal). The speaker 108 can be coupled to the signal processing apparatus 106 by way of a suitable wire connection, and the audio signal can be transmitted from the signal processing apparatus 106 to the speaker 108 over the wire connection. In another example, the signal processing apparatus 106 and the speaker 108 may be in communication by way of a wireless connection, and the signal processing apparatus 106 can transmit the audio signal to the speaker 108 over the wireless connection. The wireless connection can accord to any suitable wireless protocol, including Bluetooth, Wi-Fi, etc. In addition, while the speaker 108 is shown as being external to the signal processing apparatus 106, it is to be understood that the speaker 108 may be co-located with the signal processing apparatus 106 in a housing, such that the signal processing apparatus 106 and the speaker 108 are included in a single device.

In operation, the signal processing apparatus receives an audio descriptor 110 that is to be processed by the signal processing apparatus 106. The audio descriptor 110 can be or include an audio file of any suitable format that can be processed by the signal processing apparatus 106, such as WAV, MP3, etc. Additionally, the audio descriptor 110 may be at least a portion of streaming audio data, a digitized representation of a broadcast audio signal, at least a portion of game audio data, etc. In an exemplary embodiment, the audio descriptor 110 is representative of music (e.g., a song or portion thereof), where the music has a tonal center (e.g., a center key) that comprises a set of frequencies.

As indicated above, noise (acoustic vibrations) emitted by the ambient noise source 104 may be associated with periodicity, such that the frequency spectrum of the noise has one or more dominant (peak) frequencies associated therewith. If a peak frequency of the noise emitted by the ambient noise source 104 is relatively proximate to a frequency in the set of frequencies (key frequencies) corresponding to the tonal center of the music represented by the audio descriptor 110, the listener 102 may (incorrectly) perceive dissonance in the music when the speaker 108 outputs such music. That is, the audio output by the speaker 108 is not optimal for the environment 100, as the environment 100 includes the ambient noise source 104.

To improve the perception of the listener 102 as to the quality of the music emitted by the speaker 108, the signal processing apparatus 106 can be configured to perform a nonlinear transformation on audio to be output by the speaker 108 when an absolute value of a difference between the peak frequency in the noise from the ambient noise source 104 and a frequency in the above-mentioned set of frequencies corresponding to the key of the music is beneath a threshold.

To that end, the computing apparatus 106 can include a receiver component 112 that receives pitch-related metadata for the music represented by the audio descriptor 110. In an exemplary embodiment, the audio descriptor 110 may include such pitch-related metadata, and the receiver component 112 can extract the pitch-related metadata from the audio descriptor 110. For instance, the pitch-related metadata can identify a tonal center of the music represented by the audio descriptor 110.

In another example, the audio descriptor 110 may include or have associated therewith data that indicates that the music represented thereby has been tuned by way of standard A440 tuning. When the audio descriptor 110 fails to include such metadata, the receiver component 112 can process the audio descriptor 110 to identify pitch-related data pertaining to the music represented by the audio descriptor 110. For example, the signal processing apparatus 106 can receive an indication that the audio descriptor 110 is to be processed and music represented thereby is desirably output by the speaker 108 (e.g., the listener 102 can select a song, a movie or television program watched by the user indicates that a song is forthcoming, etc.). The receiver component 112 can receive a plurality of sequential data packets of the audio descriptor 110 (e.g. a first 40 data packets or frames), and can process the data packets to identify a tonal center associated therewith prior to the speaker 108 outputting the music.

A microphone 114 is in communication with the signal processing apparatus 106 and captures ambient sounds in the environment 100, including noise emitted from the ambient noise source 104. While the microphone 114 is shown as being external to the signal processing apparatus 106 and the speaker 108, it is to be understood that the microphone 114, the signal processing apparatus 106, and/or the speaker 108 can be packaged in a single device. The sounds captured by the microphone 114 are transmitted to the signal processing apparatus 106 (e.g., subsequent to being digitized and optionally filtered).

The signal processing apparatus 106 includes a characteristic identifier component 116 that analyzes the sounds captured by the microphone 114, and the characteristic identifier component 116 identifies at least one characteristic in such sounds. The at least one characteristic can be one or more peak frequencies in the frequency spectrum of the sounds captured by the microphone 114, boundaries of the frequency spectrum of the sounds captured by the microphone 114, distribution of frequency amplitudes of the sounds captured by the microphone 114, mean or median of the frequencies in the frequency spectrum, or other suitable characteristic of the sounds. The characteristic identifier component 116 can, for example, execute a Fast Fourier Transform (FFT) over the sounds captured by the microphone in connection with identifying such peak frequencies. In an exemplary embodiment, the microphone 114 can be configured to capture sounds for a threshold amount of time, and such sounds can be retained in a buffer. The characteristic identifier component 116 can execute the FFT over the sounds in the buffer in connection with identifying the one or more peak frequencies in noise emitted by the ambient noise source 104.

The signal processing apparatus 106 further includes an audio adjuster component 118 that can perform a nonlinear transformation on an audio signal prior to the audio signal being transmitted to the speaker 108, wherein such transformation is based upon the pitch-related metadata identified by the receiver component 112 and the peak frequency(s) identified by the characteristic identifier component 116. Pursuant to an example, the audio adjuster component 118 can compare key frequencies (frequencies of the key of the music) in the music represented by the audio descriptor 110 with the peak frequency identified by the characteristic identifier component 116. When an absolute value of a difference between a key frequency of the music (identified by the receiver component 112) and the peak frequency of the ambient noise (identified by the characteristic identifier component 118) is beneath a threshold, the audio adjuster component 118 can compute a score that indicates how well (or poorly) the music will sound if shifted slightly off-key (e.g., such that the key frequency of the music identified as being close to the peak frequency is shifted to be approximately equivalent to the peak frequency). Such score can be based on standard measures of consonance and dissonance, wherein unison (spectral alignment) is perfect harmony, musical fifths and thirds are "harmonically pleasing," musical flat fifths are less pleasing, and blending entire different tonalities is a worst-case. The audio adjuster component 118 can include any suitable scoring function that is based upon such principles.

When the audio adjuster component 118 (based upon the score computed thereby) ascertains that shifting of the pitch of the music will cause the music to sound better to the listener 102 in the environment 100, the audio adjuster component 118 shifts the pitch of the music for the entirety of a musical piece. Thus, the audio adjuster component 118, prior to transmitting the audio signal to the speaker 108, performs a nonlinear transformation on the audio signal, thereby shifting the pitch of the music. The music output by the speaker 108, then, is slightly off-key; however, due to, for example, the tonal center of the music being shifted to equal the peak frequency in the ambient noise of the environment 100, from the perspective of the listener 102 the music may sound better "off-key" compared to if the music were output in its original, intended key. The shifting of the music output by the speaker 108 can come at a cost, in terms of artifacts created due to the pitch shifting of the music. It is to be understood, however, that an artifact experienced by the listener 102 already exists in the environment 100 in the form of the ambient noise generated by the ambient noise source 104. Accordingly, if a marginal artifact at the audio replication level is outweighed by a subjective improvement in environmental interaction, a positive net effect is achieved.

Furthermore, it has been described herein at the audio adjuster component 118 can shift an entirety of a musical piece represented by the audio descriptor 110. This can increase the artifact (which can be perceived as a narrowing of an allowable range or changing a penalty curve to further favor smaller shifts) when non-musical audio is present or even when a musical track includes a large amount of non-periodic sound, such as percussion. The signal processing apparatus 106 can also be configured to interact with separate audio streams (e.g., in movies or television, one sound stream that is eligible for pitch shifting, such as background music, and another one that is ineligible for pitch shifting, such as spoken words). This can, for example, be readily undertaken with respect to video game audio, where sound effects are generated independently of the background music.

As noted above, the audio adjuster component 118 can be executed a single time for a particular musical piece, such that the pitch of the entire musical piece is shifted. Accordingly, after one musical piece has been processed by the signal processing apparatus 106 and output by the speaker 108, the audio adjuster component 118 can determine, for a next musical piece to be output by the speaker 108, whether to adjust the pitch of such musical piece to cause the tonal center of the song to better align with a relatively large amplitude periodic component of the acoustic noise generated by the ambient noise source 104. In another embodiment, when the audio descriptor 110 corresponds to a video game, the audio adjuster component 118 can determine whether to shift the pitch of a particular noise or effect in the video game immediately prior to the noise being output by the speaker 108. Moreover, the microphone 114 can be configured to sample acoustics in the environment 100 between musical pieces being output by the speaker 108. Therefore, the microphone 114 can be configured to automatically capture sound in the ambient environment 100 when there is relatively little noise in the environment 100 (e.g., when the speaker 108 is not outputting sound). In yet another example, the microphone 114 can be configured to continuously sample audio, and the characteristic identifier component 116 can employ filters to identify peak frequency(s) in ambient sounds.

In examples useful for understanding the invention, the signal processing apparatus 106 can be configured to construct audio that is generally pleasing to the listener 102 based upon the at least one characteristic of ambient noise detected by the characteristic identifier component 116. In an exemplary embodiment, the microphone 114 captures noise emitted from the ambient noise source 104, and the characteristic identifier component 116 identifies at least one peak frequency therein. In such an exemplary embodiment, the audio adjuster component 118 can be configured to construct an audio signal such that audio output by the speaker 108 based upon the audio signal is subjectively pleasing to the listener 102. In an example, the audio adjuster component 118 can construct a sequence of tones or chords, wherein each tone or chord in the sequence is harmonious with the at least one peak frequency in the ambient noise.

In other examples useful for understanding the invention, the audio adjuster component can select music from a library of music based upon the at least one characteristic of the ambient noise detected by the characteristic identifier component 116. In an example, the at least one characteristic of the noise may be a peak frequency, and the audio adjuster component 118 can select a musical piece from a library of musical pieces based upon the peak frequency in the ambient noise. The selected musical piece can be in a key that is harmonious with the peak frequency in the ambient noise. In another example, the selected musical piece can be in a key that is suitably far enough away the peak frequency in the ambient noise to avoid the listener 106 perceiving dissonance in the musical piece.

Further, these examples useful for understanding the invention are also well-suited for constructing or selecting audio based upon rhythms of the ambient noise. For example, the at least one characteristic of the ambient noise may be a periodic "click" or "clack" of a fan, motor, etc. that is loud enough to be perceived by the listener 102. The audio adjuster component 118 can receive timing information of the "click" or "clack" of the fan (or other rhythmic sound) and construct or select audio as a function of the at least one characteristic. For instance, the audio adjuster component 118 can select a musical piece with a rhythm that corresponds to the rhythm in the ambient noise produced by the ambient noise source 104. Likewise, the audio adjuster component 118 can construct audio to create, for instance, a percussion-type musical piece, where the ambient noise source 104 produces a portion of the musical piece.

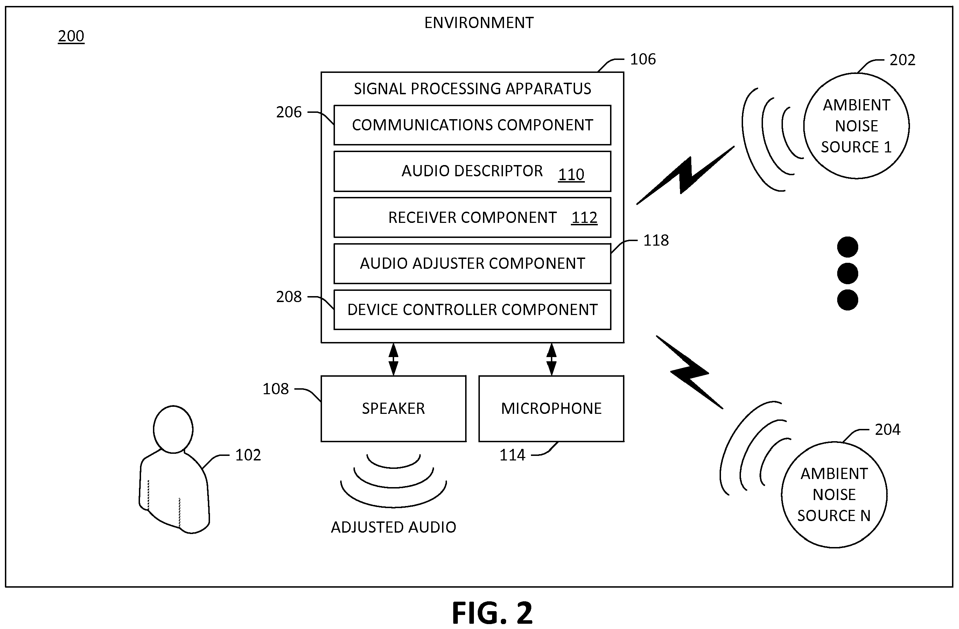

With reference now to Fig. 2, another exemplary environment 200 is illustrated. The exemplary environment 200 includes a plurality of "intelligent" ambient noise sources 202-204, any of which can emit noise that may negatively impact music heard by the listener 102 (from the perspective of the listener 102). Thus, as described with respect to the ambient noise source 104 (Fig. 1), the ambient noise sources 202-204 may include appliances, heating and cooling systems, etc. Each ambient noise source in the ambient noise sources 202-204 can include, for example, a respective wireless transceiver that can receive communications from the signal processing apparatus 106 and transmit communications to the signal processing apparatus 106. Accordingly, as built-in functionality or an aftermarket add-on, each ambient noise source in the ambient noise sources 202-204 can include respective circuitry that can control operation of a respective ambient noise source responsive to receipt of a signal from the signal processing apparatus 106. Furthermore, the ambient noise sources 202-204 may be configured output respective signals to the signal processing apparatus 106 that are indicative of respective operating parameters of the ambient noise sources 202-204. For example, the operating parameter may be angular velocity of a rotary element, frequency that a rotary element revolves about an axis, etc.

The signal processing apparatus 106 can include a communications component 206 that is configured to execute a communications protocol, such that the computing apparatus 106 can communicate with the ambient noise sources 202-204. For instance, the communications component 206 can facilitate wireless communications between the signal processing apparatus 106 and the ambient noise sources 202-204 by way of Bluetooth, Wi-Fi, or the like.

In an exemplary embodiment, at least one ambient noise source in the ambient noise sources 202-204 can publish data that is indicative of a mechanical frequency of operation of a mechanical element of the ambient noise source when the mechanical element is operating. Accordingly, for example, the first ambient noise source 202 may be a heating and cooling system, and can publish (e.g., output a signal that comprises data) that a fan rotates at a first frequency when the fan is driven by a motor. The receiver component 112 can receive such published data from the first ambient noise source 202. Additionally, the receiver component 112 can receive similar data from other ambient noise sources in the environment 100. Moreover, as described above, the receiver component 112 can receive data that is indicative of a tonal center of music represented by the audio descriptor 110, wherein the music is to be output by the speaker 108 for the enjoyment of the listener 102.

The audio adjuster component 118 may then act as described above, for instance, by adjusting pitch of the music to align a key frequency of the music with the frequency of the mechanical element of the first noise source 202 (or by constructing or selecting audio that will be pleasing to the listener 102 based upon the information set forth by the noise sources 202-204). Thus, the audio adjuster component 118 can compare data published by the ambient noise sources 202-204 and received by the receiver component 112 with a key frequency of the music represented by the audio descriptor 110, and can shift the pitch of the music based upon such comparison. Furthermore, when not all ambient noise sources in the environment 100 are capable of monitoring and publishing their operational data, or to supplement published data, the microphone 114 can be configured to capture sound in the environment 200. The audio adjuster component 118, as described above, can identify peak frequency(s) in the captured sound, and such peak frequency(s) can be used in connection with nonlinearly transforming an audio signal as a supplement to published data and/or in the absence of published data.

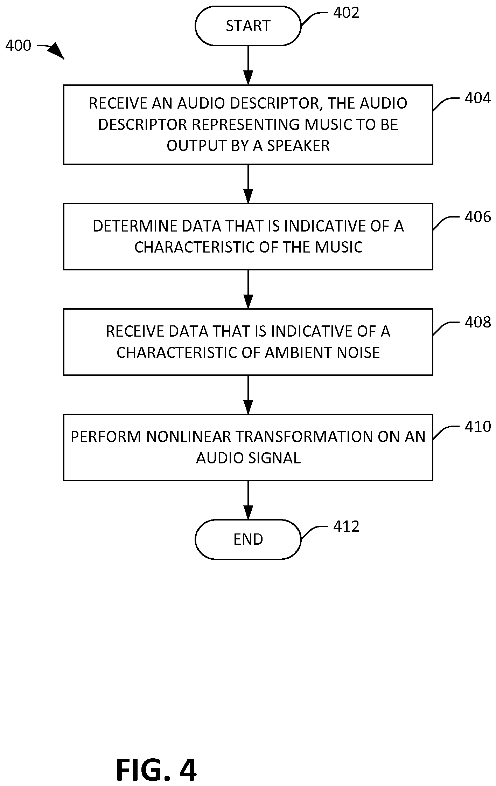

Figs. 4-6 illustrate exemplary methodologies relating to improving listening experience of a listener of audio. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a subroutine, programs, a thread of execution, and/or the like. Still further, results of acts of the methodologies can be stored in a computer-readable storage medium, displayed on a display device, and/or the like.

With reference now to Fig. 4, an exemplary methodology 400 that facilitates improving a subjective listening experience of a listener of audio is illustrated. The methodology 400 starts at 402, and at 404 an audio descriptor is received. The audio descriptor is representative of music (e.g., a song) to be output by a speaker. Accordingly, for example, a signal processing apparatus can process the audio descriptor to generate an audio signal. The audio signal, when transmitted to the speaker, causes the speaker to output audio encoded by the audio signal (and the audio descriptor).

At 406, data that is indicative of a characteristic of the music represented by the audio descriptor is determined. For example, the data may be indicative of tonal center of the music, a set of key frequencies in the music, boundaries of a frequency spectrum of the music, etc. The data can be included as metadata in the audio descriptor. In another example, a plurality of data packets of the audio descriptor can be processed to ascertain the data that is indicative of the characteristic of the music represented by the audio descriptor.

At 408, data that is indicative of a characteristic of the ambient noise is received, wherein examples of such characteristic have been set forth above. A microphone can be configured to capture noise in an environment, and a resultant noise signal generated by the microphone can be analyzed to identify, for example, at least one peak frequency therein.

At 410, a nonlinear transformation is performed on the audio signal prior to the acoustic signal being transmitted to the speaker, where the nonlinear transformation is based upon the data that is indicative of in the characteristic of the music (received at 406) and the data that is indicative of the characteristic of the ambient noise. Such nonlinear transformation may be a shift in pitch of the music, such that the tonal center of the shifted audio is substantially equivalent to an identified peak frequency. The modified acoustic signal is transmitted to the speaker, and the speaker outputs the audio based upon the modified acoustic signal. The methodology 400 completes at 412.

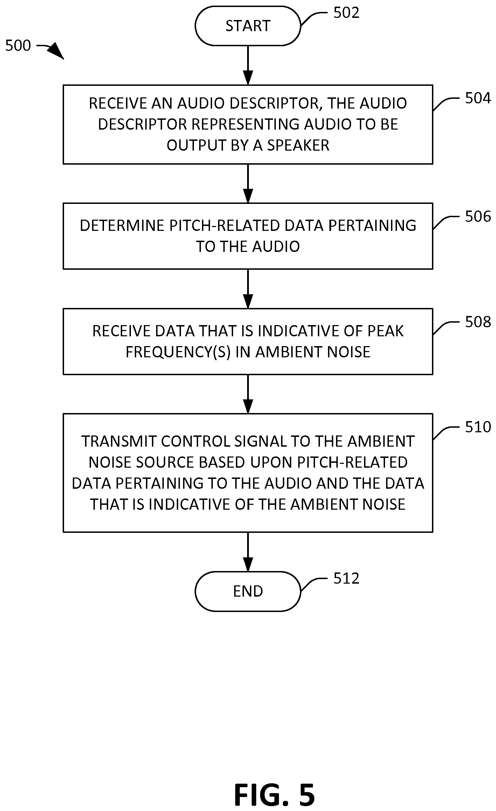

Turning now to Fig. 5, an exemplary methodology 500 that facilitates controlling operation of an ambient noise source in an environment is illustrated. The methodology 500 starts at 502, and at 504, an audio descriptor is received, wherein the audio descriptor represents audio to be output by a speaker. For instance, the audio may be a musical piece, an audio portion (musical) of a movie, an audible sound emitted by a video game console during gameplay, etc. At 506, pitch-related data pertaining to the audio is determined. At 508, data that is indicative of peak frequency(s) in ambient noise output by an ambient noise source is received. For instance, such data can be received by way of a microphone or transmitted from the ambient noise source itself. The data received at 508 can further be indicative of frequency of mechanical elements in the ambient noise source (when operating), such as a fan, a motor, or the like.

At 510, a control signal is transmitted to the ambient noise source based upon the pitch-related data determined at 506 the data that is indicative of the peak frequency(s) in the ambient noise received at 508. For instance, the control signal can cause a mechanical element in the ambient noise source to increase or decrease angular or linear velocity, such as increase or decrease angular velocity of a fan. This can be undertaken to cause the frequency of operation of the mechanical elements to correspond to frequencies of the key of the audio. The methodology 500 completes at 512.

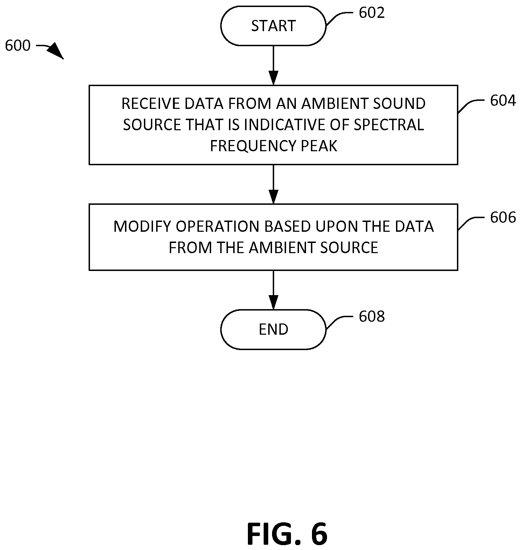

With reference now to Fig. 6, an exemplary methodology 600 that facilitates improving acoustics of an environment as perceived by a listener is illustrated. The methodology 600 can be executed, for instance, in an appliance, such as a refrigerator, a heating and cooling system, a dishwasher, a washing machine, etc. The methodology 600 starts at 602, and at 604, data from an ambient noise source is received, wherein such data is indicative of a periodic component of acoustic vibrations emitted from the ambient noise source. At 606, operation of the ambient noise source executing the methodology 600 is modified based upon the data received at 604. For instance, a fan speed, a motor speed, etc., can be modified such that the frequency of movement of mechanical elements in the ambient noise source executing the methodology 600 is substantially equivalent (or harmonically corresponds to) to frequency of acoustic vibrations emitted by the ambient noise source from which the data is received. The methodology 600 completes at 608.

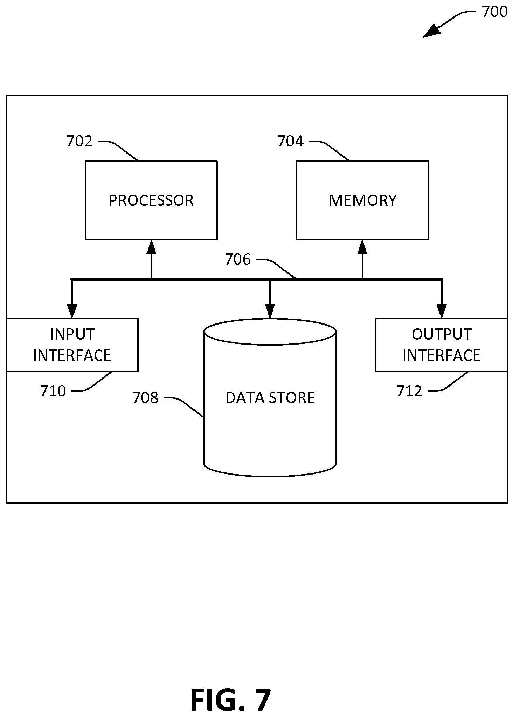

Referring now to Fig. 7, a high-level illustration of an exemplary computing device 700 that can be used in accordance with the systems and methodologies disclosed herein is illustrated. For instance, the computing device 700 may be used in a system that can modify pitch of music based upon ambient noise in an environment. By way of another example, the computing device 700 can be used in a system that supports modification of operation of an appliance based upon audio that is to be output by an audio system. The computing device 700 includes at least one processor 702 that executes instructions that are stored in a memory 704. The instructions may be, for instance, instructions for implementing functionality described as being carried out by one or more components discussed above or instructions for implementing one or more of the methods described above. The processor 702 may access the memory 704 by way of a system bus 706. In addition to storing executable instructions, the memory 704 may also store music, operating parameters of appliances, etc.

The computing device 700 additionally includes a data store 708 that is accessible by the processor 702 by way of the system bus 706. The data store 708 may include executable instructions, pitch-related metadata, music, etc. The computing device 700 also includes an input interface 710 that allows external devices to communicate with the computing device 700. For instance, the input interface 710 may be used to receive instructions from an external computer device, from a user, etc. The computing device 700 also includes an output interface 712 that interfaces the computing device 700 with one or more external devices. For example, the computing device 700 may display text, images, etc. by way of the output interface 712.

It is contemplated that the external devices that communicate with the computing device 700 via the input interface 710 and the output interface 712 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 700 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 700 may be a distributed system. Thus, for instance, several devices may be in communication by way of a network connection and may collectively perform tasks described as being performed by the computing device 700.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the details description or the claims, such term is intended to be inclusive in a manner similar to the term "comprising" as "comprising" is interpreted when employed as a transitional word in a claim.

## Claims

1. A method (400), comprising:
receiving (404) an audio descriptor (110), the audio descriptor (110) being representative of audio to be emitted from a speaker (108) in a listening environment, the audio being music to be output by the speaker (108);
receiving (406) data that identifies a characteristic of the audio;
receiving (408) data that identifies a characteristic of noise generated by a noise source (104, 202-204) in the environment, the noise source (104, 202-204) being other than the speaker (108);
processing the audio descriptor (110) to generate an audio signal that encodes the audio, the speaker (108) configured to output the audio responsive to receipt of the audio signal;
modifying the audio signal based upon the data that identifies the characteristic of the audio and the data that identifies the characteristic in the noise generated by the noise source (104, 202-204); and
responsive to modifying the audio signal, transmitting the audio signal to the speaker (108), wherein modifying the audio signal comprises performing (410) a nonlinear transformation on the audio signal,
wherein the characteristic of the music is a tonal center of the music and modifying the audio signal comprises changing the tonal center of the music.

2. The method of claim 1, wherein the characteristic of the noise comprises a peak frequency in a frequency spectrum of the noise emitted by the noise source (104, 202-204).

3. The method of claim 1, further comprising:
extracting metadata from the audio file, the metadata identifies the characteristic of the audio.

4. The method of claim 1, further comprising:
receiving a signal output by a microphone (114) positioned in the environment, the signal encoding the noise generated by the noise source (104, 202-204); and
processing the signal output by the microphone (114) to identify the characteristic of the noise.

5. The method of claim 1, wherein the characteristic of the audio is a key of the audio, the key of the audio corresponding to a plurality of frequencies, the characteristic of the noise being a peak frequency in the noise, the method further comprising:
computing a difference between the peak frequency in the noise with a frequency in the plurality of frequencies;
comparing an absolute value of the difference with a predefined threshold; and
modifying the audio signal only when the absolute value of the difference is beneath the predefined threshold.

6. A signal processing apparatus (106) that is configured to cause a speaker (108) to emit audio in a listening environment (100, 200), the signal processing apparatus (106) comprising:
a receiver component (112) configured to receive a characteristic of the audio that is to be emitted by the speaker (108), the audio being a musical piece and the characteristic of the audio being a key of the musical piece;
a characteristic identifier component (116) configured to identify a characteristic in noise generated by a noise source (104, 202-204), the noise being audible in the listening environment (100, 200) and the characteristic in the noise comprising a frequency in the noise; and
an audio adjuster component (118) configured to modify the audio prior to the audio being emitted by the speaker (108) based upon the characteristic of the audio received by the receiver component (112) and the characteristic in the noise identified by the characteristic identifier component (116),
wherein the audio adjuster component (118) is configured
to perform a nonlinear transformation on the audio based upon the characteristic of the audio received by the receiver component (112) and the characteristic in the noise identified by the characteristic identifier component (116); and
to modify the key of the musical piece based upon the key of the musical piece and the frequency in the noise identified by the characteristic identifier component (116).

7. The signal processing apparatus (106) of claim 6, wherein the receiver component (112) receives an audio file that is representative of the audio, the audio file comprising metadata that identifies the characteristic of the audio.

## Patentansprüche

1. Verfahren (400), umfassend:
Empfangen (404) eines Audiodeskriptors (110), wobei der Audiodeskriptor (110) repräsentativ für Audio ist, das von einem Lautsprecher (108) in einer Hörumgebung zu emittieren ist, wobei das Audio Musik ist, die von dem Lautsprecher (108) auszugeben ist;
Empfangen (406) von Daten, die ein Merkmal des Audios identifizieren;
Empfangen (408) von Daten, die ein Merkmal eines Geräusches identifizieren, das von einer Geräuschquelle (104, 202-204) in der Umgebung erzeugt wird, wobei die Geräuschquelle (104, 202-204) eine andere als der Lautsprecher (108) ist;
Verarbeiten des Audiodeskriptors (110), um ein Audiosignal zu erzeugen, das das Audio codiert, wobei der Lautsprecher (108) konfiguriert ist, um das Audio, das auf den Empfang des Audiosignals reagiert, auszugeben;
Modifizieren des Audiosignals basierend auf den Daten, die das Merkmal des Audios identifizieren, und den Daten, die das Merkmal in dem Geräusch, das von der Geräuschquelle (104, 202-204) erzeugt wird, identifizieren; und
als Reaktion auf ein Modifizieren des Audiosignals, Übertragen des Audiosignals an den Lautsprecher (108), wobei ein Modifizieren des Audiosignals ein Durchführen (410) einer nichtlinearen Transformation am Audiosignal umfasst,
wobei das Merkmal der Musik ein tonales Zentrum der Musik ist und ein Modifizieren des Audiosignals ein Verändern des tonalen Zentrums der Musik umfasst.

2. Verfahren nach Anspruch 1, wobei das Merkmal des Geräusches eine Spitzenfrequenz in einem Frequenzspektrum des Geräusches, das von der Geräuschquelle (104, 202-204) emittiert wird, umfasst.

3. Verfahren nach Anspruch 1, weiter umfassend:
Extrahieren von Metadaten aus der Audiodatei, wobei die Metadaten das Merkmal des Audios identifizieren.

4. Verfahren nach Anspruch 1, weiter umfassend:
Empfangen einer Signalausgabe durch ein Mikrofon (114), das in der Umgebung positioniert ist, wobei das Signal das Geräusch, das von der Geräuschquelle (104, 202-204) erzeugt wird, codiert; und
Verarbeiten der Signalausgabe durch das Mikrofon (114), um das Merkmal des Geräusches zu identifizieren.

5. Verfahren nach Anspruch 1, wobei das Merkmal des Audios eine Tonart des Audios ist, wobei die Tonart des Audios einer Vielzahl von Frequenzen entspricht, wobei das Merkmal des Geräusches eine Spitzenfrequenz in dem Geräusch ist, wobei das Verfahren weiter umfasst:
Berechnen einer Differenz zwischen der Spitzenfrequenz in dem Geräusch mit einer Frequenz in der Vielzahl von Frequenzen;
Vergleichen eines absoluten Wertes der Differenz mit einem vordefinierten Schwellenwert; und
Modifizieren des Audiosignals, nur wenn der absolute Wert der Differenz unterhalb des vordefinierten Schwellenwertes liegt.

6. Signalverarbeitungsvorrichtung (106), die konfiguriert ist, um einen Lautsprecher (108) zu veranlassen, Audio in einer Hörumgebung (100, 200) zu emittieren, wobei die Signalverarbeitungsvorrichtung (106) umfasst:
eine Empfängerkomponente (112), die konfiguriert ist, um ein Merkmal des Audios, das von dem Lautsprecher (108) zu emittieren ist, zu empfangen, wobei das Audio ein Musikstück ist und das Merkmal des Audios eine Tonart des Musikstücks ist;
eine Merkmalsidentifikatorkomponente (116), die konfiguriert ist, um ein Merkmal in einem Geräusch, das von einer Geräuschquelle (104, 202-204) erzeugt wird, zu identifizieren, wobei das Geräusch in der Hörumgebung (100, 200) hörbar ist und das Merkmal in dem Geräusch eine Frequenz in dem Geräusch umfasst; und
eine Audioeinstellerkomponente (118), die konfiguriert ist, um das Audio zu modifizieren, bevor das Audio von dem Lautsprecher (108) emittiert wird, basierend auf dem Merkmal des Audios, das von der Empfängerkomponente (112) empfangen wird, und dem Merkmal in dem Geräusch, das von der Merkmalsidentifikatorkomponente (116) identifiziert wird;
wobei die Audioeinstellkomponente (118) konfiguriert ist, um eine nichtlineare Transformation an dem Audio durchzuführen, basierend auf dem Merkmal des Audios, das von der Empfängerkomponente (112) empfangen wird, und dem Merkmal in dem Geräusch, das von der Merkmalsidentifikatorkomponente (116) identifiziert wird; und um die Tonart des Musikstücks basierend auf der Tonart des Musikstücks und der Frequenz im dem Geräusch, die von der Merkmalsidentifikatorkomponente (116) identifiziert wird, zu modifizieren.

7. Signalverarbeitungsvorrichtung (106) nach Anspruch 6, wobei die Empfängerkomponente (112) eine Audiodatei, die für das Audio repräsentativ ist, empfängt, wobei die Audiodatei Metadaten umfasst, die das Merkmal des Audios identifizieren.

## Revendications

1. Procédé (400), comprenant :
recevoir (404) un descripteur audio (110), le descripteur audio (110) étant représentatif de l'audio devant être émis à partir d'un haut-parleur (108) dans un environnement d'écoute, l'audio étant de la musique devant sortir par le haut-parleur (108) ;
recevoir (406) des données qui identifient une caractéristique de l'audio ;
recevoir (408) des données qui identifient une caractéristique de bruit généré par une source de bruit (104, 202-204) dans l'environnement, la source de bruit (104, 202-204) étant autre que le haut-parleur (108) ;
traiter le descripteur audio (110) pour générer un signal audio qui code l'audio, le haut-parleur (108) configuré pour émettre l'audio sensible à la réception du signal audio ;
modifier le signal audio sur la base des données qui identifient la caractéristique de l'audio et les données qui identifient la caractéristique dans le bruit généré par la source de bruit (104, 202-204) ; et
sensible à la modification du signal audio, transmettre le signal audio au haut-parleur (108), dans lequel modifier le signal audio comprend réaliser (410) une transformation non linéaire sur le signal audio,
dans lequel la caractéristique de la musique est un centre tonal de la musique et modifier le signal audio comprend changer le centre tonal de la musique.

2. Procédé selon la revendication 1, dans lequel la caractéristique du bruit comprend une fréquence maximale dans un spectre de fréquence du bruit émis par la source de bruit (104, 202-204).

3. Procédé selon la revendication 1, comprenant en outre :
extraire des métadonnées du fichier audio, les métadonnées identifient la caractéristique de l'audio.

4. Procédé selon la revendication 1, comprenant en outre :
recevoir une sortie de signal par un microphone (114) positionné dans l'environnement, le signal codant le bruit généré par la source de bruit (104, 202-204) ; et
traiter la sortie de signal par le microphone (114) pour identifier la caractéristique du bruit.

5. Procédé selon la revendication 1, dans lequel la caractéristique de l'audio est une clé de l'audio, la clé de l'audio correspondant à une pluralité de fréquences, la caractéristique du bruit étant une fréquence maximale dans le bruit, le procédé comprenant en outre :
calculer une différence entre la fréquence maximale dans le bruit avec une fréquence dans la pluralité de fréquences ;
comparer une valeur absolue de la différence avec un seuil prédéfini ; et
modifier le signal audio uniquement lorsque la valeur absolue de la différence est sous le seuil prédéfini.

6. Appareil de traitement de signal (106) qui est configuré pour conduire un haut-parleur (108) à émettre de l'audio dans un environnement d'écoute (100, 200), l'appareil de traitement de signal (106) comprenant :
un composant récepteur (112) configuré pour recevoir une caractéristique de l'audio qui doit être émis par le haut-parleur (108), l'audio étant une pièce musicale et la caractéristique de l'audio étant une clé de la pièce musicale ;
un composant d'identification caractéristique (116) configuré pour identifier une caractéristique dans du bruit généré par une source de bruit (104, 202-204), le bruit étant audible dans l'environnement d'écoute (100, 200) et la caractéristique dans le bruit comprenant une fréquence dans le bruit ; et
un composant de réglage audio (118) configuré pour modifier l'audio avant que l'audio soit émis par le haut-parleur (108) sur la base de la caractéristique de l'audio reçu par le composant récepteur (112) et la caractéristique dans le bruit identifié par le composant d'identification caractéristique (116),
dans lequel le composant de réglage audio (118) est configuré pour réaliser une transformation non linéaire sur l'audio sur la base de la caractéristique de l'audio reçu par le composant récepteur (112) et la caractéristique dans le bruit identifié par le composant d'identification caractéristique (116) ; et
modifier la clé de la pièce musicale sur la base de la clé de la pièce musicale et la fréquence dans le bruit identifié par le composant d'identification caractéristique (116).

7. Appareil de traitement de signal (106) selon la revendication 6, dans lequel le composant récepteur (112) reçoit un fichier audio qui est représentatif de l'audio, le fichier audio comprenant des métadonnées qui identifient la caractéristique de l'audio.
